Europäisches Patentamt

European Patent Office

Office européen des brevets

(11) Publication number: **0 059 564**
**B1**

(12) **EUROPEAN PATENT SPECIFICATION**

(45) Date of publication of patent specification: **09.01.85**

(51) Int. Cl.⁴: **C 03 B 37/025**

(21) Application number: **82300844.6**

(22) Date of filing: **19.02.82**

(54) Manufacture of optical fibre preforms.

(30) Priority: **27.02.81 GB 8106313**
**27.02.81 GB 8106311**

(43) Date of publication of application:
**08.09.82 Bulletin 82/36**

(45) Publication of the grant of the patent:
**09.01.85 Bulletin 85/02**

(84) Designated Contracting States:
**AT BE CH DE FR IT LI NL SE**

(56) References cited:
**FR-A-2 266 668**
**GB-A-1 554 978**
**US-A-3 957 474**
**US-A-4 233 045**

(73) Proprietor: **ASSOCIATED ELECTRICAL
INDUSTRIES LIMITED
1 Stanhope Gate
London W1A 1EH (GB)**

(72) Inventor: **Cundy, Steven Langford
10 Holme Way
Stanmore Middlesex (GB)**
Inventor: **Johnson, Oliver Sanders
"Murrells" 157 Vale Road
Northfleet Kent, DA11 8BP (GB)**
Inventor: **McCann, Keith
Homlea House 114 High Street
Chipping Ongar Essex, CM5 9EB (GB)**
Inventor: **Evans, Ronald Albert
76 Forest Drive West
Leytonstone London, E.11 (GB)**
Inventor: **McCormack, John Stephen
33 Alverstone Road
Wembley Middlesex (GB)**
Inventor: **Nichols, Bruce Armstrong
120 Lakedale Road
London S.E.18 (GB)**

(74) Representative: **Kirby, Harold Victor Albert
Central Patent Department Wembley Office The
General Electric Company, p.l.c. Hirst Research
Centre East Lane
Wembley Middlesex HA9 7PP (GB)**

Courier Press, Leamington Spa, England.

# Description

This invention relates to the manufacture of glass preforms, from which optical fibre waveguides can be produced by drawing, by a method of the type (hereinafter referred to as the type specified) in which a chemical reaction is caused to take place between oxygen and the vapour or vapours of one or more compounds such as halides, which reaction results in the formation of a coating composed essentially of one or more oxides on a glass substrate surface; the substrate surface on which the coating is formed may be the interior surface of a glass tube or the exterior surface of a glass core.

Methods which have been proposed for promoting a said chemical reaction include the application of heat, as known from US 3,957,474 and the use of a plasma torch for heating the substrate, as known from FR 2,266,668. Thus for effecting deposition of a coating on the interior surface of a substrate tube, a heat source may be traversed along the exterior of the tube while the gaseous mixture flows through the tube, the solid reaction product being formed as fine particles which are deposited progressively along the surface of the tube bore and converted into a glass layer by further heating, and the process being repeated as required to form a multi-layer coating. Progressive deposition along the bore of a tube can also be effected by causing relative longitudinal movement to take place between the tube and a plasma-exciting device external to the tube. In another method which has been proposed for effecting plasma activation of a said reaction in a gaseous mixture flowing through a substrate tube, the plasma-exciting device is maintained in a stationary position around a portion of the tube adjacent to the gas exit end thereof, and the electrical power input to the device is continuously and progressively varied to cause the termination of the plasma column to be swept along the tube, the column being alternately extended and contracted, and each sweep of the plasma column again resulting in progressive deposition along the tube.

It is an object of the present invention to provide an improved method of the type specified for manufacturing an optical fibre preform, by the deposition of a coating as aforesaid either on the interior surface of a substrate tube or on the exterior surface of a substrate core.

According to the invention, in a method of manufacturing a glass optical fibre preform in which a coating composed essentially of one or more oxides is formed on a surface of an elongate cylindrical substrate by causing a chemical reaction to take place between oxygen and the vapour or vapours of one or more compounds capable of reacting with oxygen to produce the desired coating material, a tube which has a multiplicity of perforations through its wall is supported coaxially with the substrate, an annular space being provided between the said tube and the substrate, and a gaseous mixture consisting of oxygen and said vapour or vapours, and optionally an additional carrier gas, is caused to flow into the said annular space, at least the said vapour or vapours being introduced into the annular space by being passed through the perforations in said tube, a sufficient gas pressure differential being maintained between the interior and exterior of said tube to cause gas to flow through the perforations into said annular space, while at least a major part of the length of the substrate is maintained at an elevated temperature, and a chemical reaction is caused to take place throughout the annular space by generating energy in said space whereby a coating of solid material resulting from the said reaction is formed simultaneously on the whole of the said surface of the heated length of the substrate, while residual gases and gaseous reaction products are withdrawn from said annular space.

In a first form of the invention, the substrate consists of a glass tube, an inner tube which has a multiplicity of perforations through its wall is supported coaxially within the substrate tube, and the said gaseous reaction mixture, or at least the said vapour or vapours, is or are introduced into the annular space between the inner perforated tube and the substrate tube by being passed into the inner tube so as to emerge through said perforations into the said space, the gas pressure within the inner tube being maintained higher than that in the said space, while heat is applied to the exterior of at least a major part of the length of the substrate tube, and a chemical reaction is caused to take place throughout the said space by generating energy in said space, whereby a coating of solid material resulting from the said reaction is formed simultaneously on the whole of the interior surface of the heated length of the substrate tube.

The substrate tube is usually of circular cross-section, in accordance with the normal practice in the manufacture of optical fibre preforms. The inner, perforated tube is also usually of circular cross-section.

A pressure differential must be maintained between the interior of the inner tube and the said annular space in which the reaction takes place, in order to ensure that the vapour or vapours (with or without oxygen and/or additional carrier gas) introduced into the inner tube will flow through the perforations into the said space. Preferably one end of the inner tube is closed or has a restricted outlet to enable the required pressure differential to be maintained, and to ensure that the reactant vapours leave the inner tube only through the perforations. Alternatively, it is possible to introduce the gas/vapours simultaneously into both ends of the inner tube to sustain the required pressure. The reduced pressure in the annular space is maintained by constant exhaustion of this space by suitable pumping means connected to one end of the substrate tube, through which gaseous reaction products, carrier gas and any residual gaseous reactants are removed. The pressure in the inner tube must be limited so that the flow rate of the gases into the annular reaction space is not so rapid that the required reduced pressure in said space cannot be maintained by the pumping system. If desired, the substrate tube may be exhausted from both ends, especially if gases are introduced into both ends of the inner tube.

In a second form of the invention, the substrate consists of an elongate seed core and is supported coaxially within a tube which has a multiplicity of perforations through its wall, the perforated tube is surrounded by a coaxial outer tube, an annular duct being provided between the inner perforated tube and the outer tube, and the said gaseous reaction mixture is passed into said duct under sufficient pressure to cause passage thereof through the perforations of the inner tube into the annular space between the inner tube and the seed core, while the seed core is maintained at an elevated temperature and a chemical reaction is caused to take place throughout the said space by generating energy in said space, whereby a coating of solid material resulting from the said reaction is formed simultaneously on the whole of the exterior surface of the seed core.

The seed core may be a rod or tube, and is usually of circular cross-section, but may be of any other desired cross-sectional configuration, for example elliptical, hexagonal, square or reactangular. The seed is usually formed of glass, but may be a rod or tube of non-vitreous material, for example carbon or ceramic material, which can be subsequently removed from the coating. The seed may, if desired, consist or a silica-based optical fibre core preform of either constant or radially graded refractive index, the coating formed thereon constituting a cladding and/or barrier layer.

If a tubular seed core is employed, it may be sealed at one end, or may be open at both ends to permit heating or cooling by passing hot or cold gas through the tube, if required for improving the form of the deposit or the preform characteristics. If the seed core is in the form of a tube, after completion of the coating process, and vitrification of the coating if necessary, the tube bore is collapsed in known manner.

The inner, perforated tube and the outer tube are usually of circular cross-section. The annular duct between the inner and outer tubes constitutes a pressure equalising reservoir of the gaseous mixture fed through the perforations of the inner tube into the space surrounding the seed core in which the coating-forming reaction takes place.

If desired, the gas pressure in the annular reaction space may be modified in a radial or longitudinal direction by means of pressure or exhaust control tubes with perforations in their walls, located in the said space, or a perforated outer tube may be used as an extraction and pressure control device. The reservoir duct between the inner and outer tubes may be sub-divided in a linear or spiral manner to provide a gas input duct and an exhaust duct, each duct having perforations of different size or distribution; alternatively, such an arrangement may be employed for the input of different constituents of the gaseous mixture.

In either form of the invention, the application of heat is required for maintaining the substrate tube or seed core at a suitable elevated temperature for promoting smooth, uniform deposition, and may also provide at least part of the energy required for promoting the gaseous reaction. In the first form of the invention, the heating is conveniently effected by enclosing the substrate tube in a tubular electric furnace.

In the second form of the invention a similar external heating arrangement can be used where the seed core is in the form of a rod. However, the use of a tubular seed core is particularly advantageous since heating means, such as a heating element or an electrode, can be inserted within the tube. Such internal heating is the preferred method of maintaining the seed substrate at the required elevated temperature. The outer regions of the system, that is to say the perforated tube surrounding the seed, the outer tube, and the reservoir duct between these tubes, are maintained at a temperature considerably lower than that of the seed, to ensure that the coating-forming reaction takes place substantially only in the vicinity of the seed, and hence that substantially all of the solid reaction product is deposited on the seed, little or no deposition occurring on the perforated tube.

The method of the invention is particularly applicable to the manufacture of an optical fibre preform composed of silica with one or more dopants for imparting a desired refractive index profile to the fibre. In this case, the substrate tube or seed core is formed of vitreous silica, and the reactant vapours suitably consist of silicon tetrachloride and, for at least part of the process, a halide or halides from which the required dopant or dopants is or are derived. The halide vapours are entrained in streams of carrier gas which are bubbled through the liquid halides: oxygen may be employed as the carrier gas, or an additional gas, suitably argon, may be used for this purpose. The halides employed are usually chlorides, but if it is desired to introduce fluorine as a dopant in the silica coating a suitable fluorine-containing compound, such as dichloro-difluorosilane, may be included in the reaction mixture.

In the first form of the invention, the substrate tube may form the cladding of an optical fibre the core of which is formed of the coating material, or the tube may constitute a support for an optical waveguide structure wholly formed by the coating material. The composition of the gas/vapour mixture introduced into the inner tube may be maintained constant throughout the deposition process, to produce a step refractive index structure, or may be varied as desired to produce a coating of graded refractive index, or a coating composed of two or more concentric regions with and without dopants, which regions may constitute, for example, cladding and/or barrier layers and the core of the fibre obtained from the preform, each such region being of either uniform or graded composition as required.

In the second form of the invention the coating deposited on the seed may constitute only the core of the optical fibre, the coated seed being subsequently inserted into a cladding or support tube and the assembly then consolidated by heating, before drawing. If desired, however, the dopant halides may be eliminated and/or varied for the later stages of the process, so that a cladding and/or barrier layer is formed around the core; again, each region of the deposit may be of either constant or graded composition.

The method of the invention constitutes an essentially continuous process for building up a coating on the surface of an elongate substrate, the whole of the required length of the substrate being coated at the same time. Thus the operations of causing the flow of gases and vapours through the system, generating energy in the annular reaction zone, and applying heat, can be carried out continuously for any length of time required to produce a coating of a desired thickness. However, the process may be interrupted when desired, provided that on recommencement the continuity of the composition of the coating, whether uniform, graded, or stepped, is maintained by appropriate control of the composition of the gaseous reaction mixture and of the operating conditions.

In either form of the invention, the dimensions of the spaces both inside and outside the perforated tube, and the arrangement of the perforations in said tube, should be such that the coating deposited on the substrate is of uniform thickness both radially and longitudinally. The perforations may be varied in respect of number, diameter and distribution along the length of the tube as required to produce desired gas flow and deposition rates. In particular, in the first form of the invention, it may be necessary to provide an increasing number of perforations towards the end of the inner tube remote from the gas input end thereof, to counteract the effect of a drop in pressure along the tube. It may also be desirable to rotate and/or reciprocate the perforated tube with respect to the substrate tube or seed, to ensure radial and longitudinal uniformity of deposition of the coating.

The perforated tube is preferably formed of vitreous silica, through which perforations of the required sizes and distribution can be drilled; alternatively, the tube may be formed of a porous ceramic material with suitably distributed and sized pores constituting the required perforations.

If desired, some or all of the constituents of the gaseous mixture may be introduced through individual perforated tubes inserted into the main tube system, either inside or outside the aforesaid perforated tube. Such an arrangement may be advantageous when it is required to vary the rates of flow of the halide vapours in relation to one another, in the manufacture of a graded index fibre.

The energy generated in the annular space between the substrate and the perforated tube, for activating the coating-forming reaction, may be of a non-isothermal type, produced for example by a plasma or a laser beam, or may be isothermal energy produced by the heating of the substrate either externally or, in the case of a tubular seed core, internally, as mentioned above, or by gas combustion taking place in the said space. If a non-isothermal energy source is employed, the energy produced may be enhanced by the heat applied to the system.

A preferred energy source is a plasma-exciting device, operated in such a manner as to produce a plasma column in the gaseous mixture in the annular reaction zone between the substrate and the perforated tube, and to maintain the column throughout substantially the whole length of the said space. Preferably the device is maintained in a stationary position with respect to the assembly of substrate and perforated tube, but if desired it may be reciprocated longitudinally with respect to the said assembly. The device may be a RF coil surrounding a substrate tube, or surrounding the tube system around a seed core. Alternatively, and preferably, the device may be a microwave cavity located around one end of the substrate tube, or of the outer tube around a seed core, and supplied with sufficient power to produce a plasma column of the required length. It is usually necessary to employ auxiliary means, such as a Tesla coil, to initiate the plasma.

The maintenance of a pressure differential, as aforesaid, such that the gas pressure within the inner perforated tube in the first form of the invention, or within the outer reservoir duct in the second form of the invention, is greater than that in the annular space between the perforated tube and the substrate in each case, is necessary not only for ensuring continuous gas flow into the said space, but also to ensure that a plasma is produced only in the said space. Thus the pressure in the inner tube or outer duct respectively, which is controlled in the gas/vapour input line to said tube or duct, is kept sufficiently high to prevent plasma formation within said tube or duct, while the pressure in the said annular space is maintained sufficiently low to ensure that a plasma column of appropriate length is sustained in this space.

The conditions of temperature and gas flow, as well as pressure differential, are so controlled that reaction between the oxygen and reactant vapour or vapours takes place only in the annular space between the perforated tube and the substrate, the occurrence of any reaction within the perforated tube in the first form of the invention, or outside the perforated tube in the second form of the invention, being prevented. In the first form of the invention, preferably only the reactant vapours, entrained in a carrier gas, for example argon, are passed into the inner perforated tube, the oxygen, with or without additional carrier gas, being passed through the space between the inner and substrate tubes, so that the said reaction can take place only on mixing of the reactant vapours with oxygen in said space. If desired, however, the oxygen can be passed into the inner tube, and may constitute the carrier gas for the vapours: in this case the heat applied to the substrate tube must be so controlled that the temperature of the inner tube is maintained too low to cause thermally activated reaction to occur therein.

When a plasma is employed for activating the reaction, the oxygen present in the annular space can provide sufficient ionisable gas to sustain the plasma, but if desired an additional ionisable gas, suitably argon, krypton or xenon, may also be passed through the annular space, whether or not such a gas is used as the carrier for the reactant vapours. The provision of such an additional ionisable gas assists in sustaining the plasma as well as increasing the total carrier gas flow through the system. A relatively high rate of flow of carrier gas in relation to the rates of flow of oxygen and reactant vapours is advantageous since the higher the ratio of carrier gas flow rate to oxygen and reactant vapour flow rates, the greater is the length of plasma column attainable with a given level of power input to the plasma-exciting device. The ratio of the flow rates of oxygen to reactant vapour or vapours should, of course, be sufficiently high to ensure substantially complete conversion of the reactant compounds to the oxides: we have found, in practice, that a proportion of oxygen considerably in excess of the stoichiometric proportion is required for complete conversion.

It is usually preferred to control the conditions of temperature of the substrate tube or seed core, gas pressure in the said annular space, and relative rates of flow of the gaseous constituents into the said space, so that a vitreous reaction product is formed directly on the substrate, without preliminary formation of particulate material either on the substrate or in the gaseous reaction mixture in the said space. With plasma excitation, for example using a power supply not substantially greater than 300 watts, the gas pressure in the said space occupied by the plasma is preferably maintained below 100 Torr, and if it is desired to form a vitreous coating directly the pressure is preferably maintained below 20 Torr. However in some cases operation at higher power and higher pressure, with the formation of a particulate coating, may be desirable, since higher deposition rates are attainable under such conditions. The substrate is preferably maintained at a sufficiently high temperature to ensure the production of a smooth, continuous vitreous coating without causing distortion of the substrate, a suitable temperature in the case of a silica substrate being about 1000°C. If a particulate coating is formed initially it is vitrified by the applied heat which in these circumstances may be required to raise the temperature of the substrate above 1000°C, for example to 1200—1250°C.

Some deposition of the coating material may occur on the outer surface of the perforated tube in the first form of the invention, or on the inner surface of the said tube in the second form of the invention, but to a leser extent than on the substrate, provided that the substrate is maintained at a suitably high temperature, and we have found that little or no deposition occurs in the perforations, so that these do not become blocked.

One suitable form of plasma-exciting device for use in carrying out the method of the invention is a microwave cavity of the asymmetrical type, formed of two concentric cylinders, the inner cylinder being located around a portion of the tube which contains the plasma in operation, that is to say the substrate tube in the first form of the invention, or the perforated tube in the second form of the invention, in each case adjacent to one end of the tube. The inner cylinder is shorter than the outer cylinder, and the cavity is so designed that, in operation, a region of high electrical field strength is produced only at the inner end of the inner cylinder (that is to say the end of the inner cylinder remote from the adjacent end of the tube surrounded by the cylinder), so that the plasma column produced extends wholly along the space in which reaction is required to take place, and not in the reverse direction.

The power input to the microwave cavity, from a microwave generator, is maintained at an approximately constant level throughout the coating process, and may be of any desired magnitude for producing a plasma column of the length required to effect deposition of the coating on a given longitudinal region of the substrate. Furthermore the power level required will also depend upon the gas pressure in the space between the perforated tube and the substrate, and upon the relative rates of flow of the constituents of the gaseous mixture through the system, since these factors, as indicated above, affect the length of plasma column obtained with a given power input.

Preferably, in addition to a microwave cavity as aforesaid, an electrically conductive tube is positioned coaxially around the tube system, abutting the microwave cavity and extending along the tube system for a distance corresponding to the desired length of the plasma column, the arrangement being such that the combination of the conductive tube and the plasma column produced in operation constitutes a coaxial waveguide; this conductive tube may be constituted by the inner wall of a tubular furnace employed for external heating of the system, or may be a separate metal tube. In operation of this arrangement of microwave cavity and conductive tube (hereinafter referred to as a "waveguide tube"), power from the cavity is coupled to the plasma, and a progressive electromagnetic wave is launched along the waveguide from the cavity, promoting increased extension of the plasma column for a given power input to the cavity.

The dimensions of the microwave cavity are preferably such that the cavity will support an electromagnetic wave in the transverse electromagnetic (TEM) mode, and the length of the inner cylinder of the cavity is preferably adjusted so that the power reflected at the inner end of the inner cylinder sets up a standing wave pattern within the cavity, with the maximum voltage at the level of the inner end of the inner cylinder. Such a standing wave pattern is approximately equal to $(2n+1)\lambda/4$ where $n$ is an integer and $\lambda$ is the free space wavelength of the operating frequency applied to the cavity.

Advantageously, for carrying out the method of the first form of the invention, the waveguide tube has an internal diameter which is such, in relation to the internal diameter of the substrate tube (corresponding to the outer diameter of the plasma column), that the wave propagated along the waveguide is in the $H_{10}$ coaxial mode: we have found that propagation in the $H_{10}$ mode results in the production of a plasma column of maximum length, with any given conditions of power input and gas flow rates and pressure, thus giving optimum efficiency in respect of the use of power, and that propagation in this mode depends upon the relationship between the internal diameters of the substrate tube and the waveguide tube respectively. Thus, for a given substrate tube internal diameter, there is a critical minimum internal diameter of the waveguide tube which must be equalled or exceeded in order to obtain propagation in the $H_{10}$ mode along the waveguide, and hence to obtain the optimum length of plasma column. The minimum waveguide tube internal diameter required, to ensure propagation in the $H_{10}$ mode, is close to that derived from the following relationship:—

$$\lambda = \pi(x+y)$$

where $\lambda$ is the free space wavelength of the operating frequency, $x$ is the internal radius of the substrate tube, and $y$ is the internal radius of the waveguide tube.

Similar considerations apply in carrying out the method of the second form of the invention, using a microwave cavity and waveguide tube: thus propagation of a wave in the $H_{10}$ mode along the waveguide is dependent upon the relationship between the internal diameters of the waveguide tube and the perforated tube respectively, in a similar manner to the dependency on the internal diameters of the substrate tube and the waveguide tube in the first form of the invention.

For ensuring optimum operation of the microwave cavity/coaxial waveguide arrangement, the total impedance of this arrangement should match that of the combination of the microwave generator and the cable connecting the generator to the cavity. The impedance of the cavity/waveguide system is affected by the internal diameter of the waveguide tube, and can be conveniently adjusted to the optimum value by altering the ratio of the diameters of the inner and outer cylinders of the cavity.

As an alternative form of energy source, which can be used instead of a plasma exciting device, a laser may be located adjacent to one end of the substrate tube in the first form of the invention, or of the perforated tube in the second form of the invention, and operated in such a manner that a laser beam is directed along and within the annular space between the perforated tube and the substrate, so as to surround the perforated tube or the seed core respectively.

A further method of generating the energy required for promoting the coating-forming reaction, which may be employed in conjunction with, or as an alternative to, another form of energy excitation such as the production of a plasma, consists in including a combustible gas in the gaseous reaction mixture, and effecting combustion of this gas in the annular space between the substrate and the perforated tube. If the substrate is heated externally (or internally in the case of a tubular seed core), for example to 1000°C, before the combustible gas is introduced, spontaneous ignition will take place in a gaseous mixture containing appropriate relative proportions of oxygen and combustible gas. Alternatively, the additional heating may be omitted, and ignition of the gas effected by suitable means, such as an electrode, inserted in the said annular space at one end of the tubular system, the combustion of the gas then providing sufficient heat to maintain the substrate at the required elevated temperature. The combustible gas used should be one whose products of combustion will not include substances which would be undesirable contaminants of the deposited coating: carbon monoxide or other non-hydrogen-containing gas or vapour is preferred. The combustible gas may be employed as the carrier gas for the reactant vapours.

In the first form of the invention the combustible gas is fed into the inner perforated tube, together with the reactant vapours and, if required, an additional carrier gas, while oxygen is passed through the annular space between the inner tube and the substrate tube, so that the combustible gas is ignited on emerging through the perforations into said space. Oxygen is preferably excluded from the gas mixture introduced into the inner tube, or if included is present in an insufficient concentration to support combustion, in order to ensure that combustion takes place only in the outer annulus, and that no back-firing into the inner tube can occur. The rate of flow of oxygen into the annulus must of course be considerably in excess of that required for reaction with the halide vapours, to provide sufficient oxygen to effect continuous combustion.

If the perforated tube tends to become overheated as a result of the gas combustion taking place around it, it may be necessary to make provision for cooling this tube to prevent distortion thereof, for example by passing cooling fluid, suitably water or nitrogen, through an additional tube disposed inside the perforated tube, the relative diameters of the cooling tube and the perforated tube being such that the flow of gases through the perforations is unimpeded. Alternatively, the perforated tube may be formed of a material having a softening temperature higher than that of silica, for example vitrified alumina or a porous ceramic as aforesaid.

A combustible gas may be similarly employed in the second form of the invention: in this case the combustible gas is included in the gas mixture introduced into the outer duct, and substantially all the oxygen required for the combustion and the coating-forming reaction is preferably fed directly into the annular space between the seed core and the perforated tube, so that combustion takes place only in this space. Alternatively the oxygen may be fed into the outer duct with the other gases, provided that the duct is maintained sufficiently cool to prevent gas combustion from taking place therein. Means for cooling the perforated tube may also be provided.

For carrying out the process of the invention, using any of the methods described for activating the reaction, the glass substrate is preferably disposed vertically; in the first form of the invention the inner tube is supported from the upper end of the substrate tube, the gases preferably being introduced into the upper end of the tube assembly. Alternatively the process can be carried out with the substrate, perforated tube, and outer tube in the second form of the invention, disposed horizontally. In either case, but especially with the horizontal arrangement, it may be desirable to rotate the substrate continuously about its longitudinal axis, instead of or in addition to the rotation of the perforated tube relative to the substrate, referred to above, in order to avoid the possibility of non-uniformity of deposition of the coating over the whole circumference of the substrate.

The method of the invention is advantageous in that deposition of the coating is effected simultaneously over the whole of the required length of the substrate, instead of progressively along the substrate as is the case with previously proposed methods of forming the coating by a reaction promoted by either heat or a plasma. The formation of a coating of a desired thickness is thus achieved much more rapidly than in the said previous methods. Furthermore, since the coating is built up continuously, and is not formed in a plurality of discrete layers, a continuous gradation of the composition of the coating can be obtained. Thus, for the production of an optical fibre having a graded refractive index, the dopant precursor content of the gaseous reaction mixture is modified continuously, rather than incrementally, to give a continuous gradation of the dopant content of the deposited coating, resulting in a fibre having a smooth refractive index profile.

The method also allows large diameter preforms to be easily produced without damage or strain, especially in a static arrangement in which the substrate is not rotated. In addition the use of plasma excitation combined with controlled gas flow distribution allows the deposition to be carried out at lower temperatures without the production of undesirable local variations in deposition quality and quantity, this again favouring the production of large preforms. The larger preforms which can be obtained by this process enable long continuous lengths of optical fibre to be produced at lower cost per unit length than is possible with smaller preforms.

The second form of the invention has the additional advantage that the enclosed system of seed core and surrounding tubes can readily be purged with flowing gases and cleaned with etching or cleaning liquids.

The plasma can be controlled by power input, frequency, and variable tuning of the plasma-exciting device, to modify or focus the plasma configuration in any desired manner for producing controlled deposition and an improved preform. The precision of the control provided by the plasma technique, suitably modified by electromagnetic field control, combined with pressure and flow control of the gaseous reaction mixture, enables the system to be operated automatically to produce preforms of improved consistency of composition and dimensions.

Some specific methods in accordance with the invention, for the manufacture of optical fibre preforms composed of a doped silica core and silica cladding will now be described by way of example with reference to the accompanying diagrammatic drawings, in which

Figure 1 shows, in part-sectional elevation, apparatus employed for carrying out the method in accordance with the first form of the invention, and

Figures 2, 3 and 4 respectively show, in part-sectional elevation, three forms of apparatus for carrying out the method in accordance with the second form of the invention.

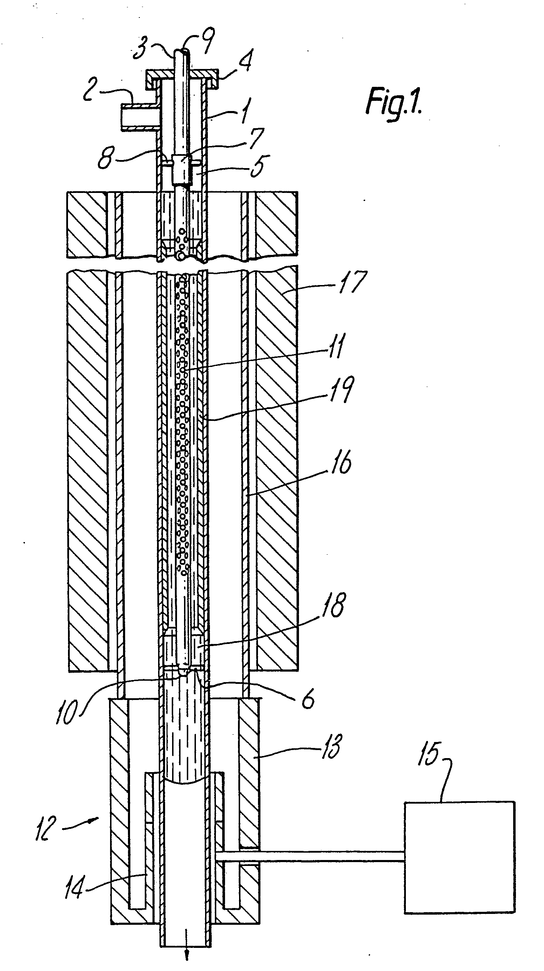

Referring to Figure 1, a vitreous silica substrate tube 1, supported vertically, has an inlet for gas which may be a side tube 2 adjacent to its upper end, or alternatively (not shown) a tube inserted through a seal at its upper end, and an inner tube 3 of vitreous silica is sealed through a cap 4 closing the upper end of the tube 1, forming an annular space 5 between the tubes 1 and 3. The tube 3 is located coaxially within the substrate tube by means of three silica projections 6 attached to its lower end and abutting against the substrate tube wall, and a short length of closely fitting silica tube 7 with similar projections 8 which is placed over the tube 3 near its upper end. The open upper end 9 of the tube 3 is connected to means (not shown) for supplying the required mixture of carrier gas and reactant vapour or vapours to this tube, the lower end 10 of the tube 3 is closed, and the wall of the tube 3 is pierced by a multiplicity of perforations 11 (shown greatly enlarged) to permit egress of the reactant vapours and carrier gas into the space 5 which constitutes the reaction zone. The lower end of the substrate tube 1 is connected to a vacuum pump (not shown), for exhaustion of the tube as indicated by the arrow.

A microwave cavity 12, formed of an outer cylinder 13 and an inner cylinder 14 of predetermined height, is located adjacent to the gas exit end of the tube 1, the lower end of the tube being inserted through the inner cylinder 14: the cylinder 14 is formed in two portions enabling its height to be adjusted telescopically. Power is supplied to the cavity from a microwave generator 15. A waveguide tube 16 of circular cross-section, formed of high temperature oxidation resistant steel is also positioned around the substrate tube, extending from the top of the microwave cavity nearly to the gas inlet tube 2, and the tube 16 is surrounded by a tubular electric furnace 17.

In a specific form of the apparatus described above with reference to Figure 1, employed for carrying out the process described in the example, the substrate tube 1 has an internal diameter of 16.5 mm and an external diameter of 19 mm, the internal and external diameters of the inner tube 3 are respectively 4 mm and 6 mm, and the perforations 11 are 50 microns in diameter: these perforations are conveniently formed by drilling through the tube wall with a laser beam; the tube has 120 perforations distributed over 15 cm of its length. The waveguide tube 16 has an internal diameter of 6.1 cm, and the tubular furnace 17 has an internal diameter of 7.5 cm. The frequency of the power input to the microwave cavity is 2.45 GHz (wavelength $\lambda=12.2$ cm): the height of the inner cylinder 14 of the cavity is therefore approximately 9.15 cm, that is to say $3/4\lambda$, the optimum value being slightly less than this and being found by tuning, which is effected by adjusting the height telescopically. The outer diameter of the inner cylinder, and the inner diameter of the outer cylinder, of the cavity, are respectively 32 mm and 57 mm: these dimensions are found to make the overall impedance of the cavity/waveguide system match that of the microwave generator and cable, when the system is operated under the conditions described in the following example.

In the specific example of the first form of the invention, the apparatus described above with reference to Figure 1 is employed for the production of a step refractive index preform consisting of an undoped silica cladding layer constituted by the substrate tube 1, and a core of silica doped with germania and phosphorous pentoxide, formed by the deposition of a vitreous coating on the interior surface of the tube wall. Initially a stream of argon alone is passed into the inner tube 3, while oxygen alone is passed into the inlet tube 2 and through the annular space 5, and substantially constant power of 300 watts is supplied to the microwave cavity. When the plasma column 18 has been established in the space 5, and the furnace has heated up to the required temperature to maintain the substrate tube wall at 1000°C, further streams of argon are bubbled through liquid silicon tetrachloride, germanium tetrachloride and phosphorus oxychloride respectively, these streams entraining the chloride vapours are mixed with the main argon stream, and this gaseous mixture is passed into the tube 3, first passing through a capillary tube (not shown) of 0.5 mm bore and one metre long, to control the gas pressure within the tube 3, which is thus maintained at approximately one-fifth of an atmosphere. The flows of the respective gas streams are controlled to give constant flow rates of 380 standard cubic centimetres per minute (sccm) of total argon, 45 sccm of oxygen, 7.8 sccm of silicon tetrachloride, 0.35 sccm of germanium tetrachloride, and 0.5 sccm of phosphorus oxychloride, and the plasma space 4 is evacuated to a constant pressure of approximately one Torr.

Under these conditions of gas flow, pressure, temperature and power supply, employed in the manufacture of a specific preform, continuous deposition of glass composed of silica containing 4.5 mol. % of germania and 0.5 mol. % of phosphorus pentoxide was effected on the substrate tube wall, forming a coating 19 (shown in exaggerated thickness) over approximately 18 cm of the length of the tube, extending from 1 cm below the topmost perforations in the inner tube to 4 cm below the lowest perforations. During continuous operation for 4.6 hours, the weight of glass deposited on the substrate tube was 4.3 grams, some deposition also occurring on the exterior of the inner tube 3.

It should be noted that since the region of the substrate tube in which deposition of a satisfactory vitreous coating occurs is limited by cooling of the end portions of the furnace, the perforations 11 permitting egress of the chloride vapours into the reaction zone 5 are provided only in a part of the wall of the inner tube 3 which corresponds in length and longitudinal position to the region of the substrate tube which can be maintained at the requisite temperature of 1000°C. If deposition on a greater length of substrate tube is required, this can of course be achieved by employing a waveguide tube and furnace of greater length, and increasing the power input to the microwave cavity to extend the plasma column further up the substrate tube.

After completion of the deposition process, the inner tube 3 is withdrawn from the substrate tube, and the coated bore of the latter is collapsed and subsequently drawn to fibre, in known manner. The preform produced in the specific example described above gives one kilometre of fibre of core diameter 50 microns and external diameter 120 microns.

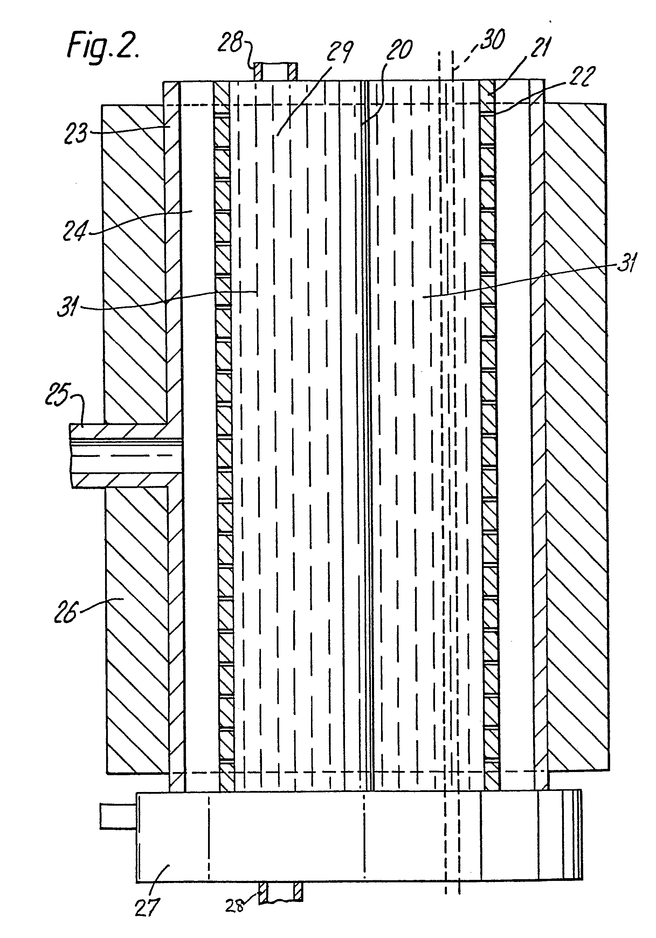

Referring to Figure 2, a seed rod 20 of vitreous silica is supported vertically along the axis of a silica tube 21 which has a multiplicity of perforations 22 through its wall, the perforations being distributed regularly along the length and around the circumference of the tube. The tube 21 is surrounded by a coaxial outer tube 23, forming an annular reservoir duct 24 around the perforated tube 21, which duct is supplied with gases and vapours through an inlet pipe 25. The outer tube 23 is surrounded by a tubular electric furnace 26. A microwave cavity 27 is positioned around the lower end of the tube 23; preferably the cavity is of the asymmetrical form described above with reference to Figure 1, the inner cylinder of the cavity being located around the lower end of the perforated tube 21. A metal waveguide tube (not shown) may also be provided, surrounding the tube 23 and within the furnace 26, and extending from the microwave cavity along the whole length of the tube 23. Exhaust outlets 28 are provided at both ends of the annular space 29 between the rod 20 and tube 21. An alternative exhaust means consists of a plurality of perforated tubes passing through the space 29: one such tube is shown at 30, by broken lines.

In operation of the arrangement shown in Figure 2, a gaseous mixture consisting of argon, oxygen, silicon tetrachloride vapour and one or more dopant chloride vapours is passed into the reservoir duct 24 and thence through the perforations 22 into the annular space 29, the gas pressure in the space 29 being maintained lower than that in the duct 24. The power input to the microwave cavity is adjusted, in relation to the gas flow rates and pressure in the space 29, to produce a plasma column 31 extending through the whole length of the space 29. A coating of silica and the dopant oxide or oxides, in either vitreous or particulate form depending upon the gas pressure in the space 29, is built upon the whole surface of the rod 20.

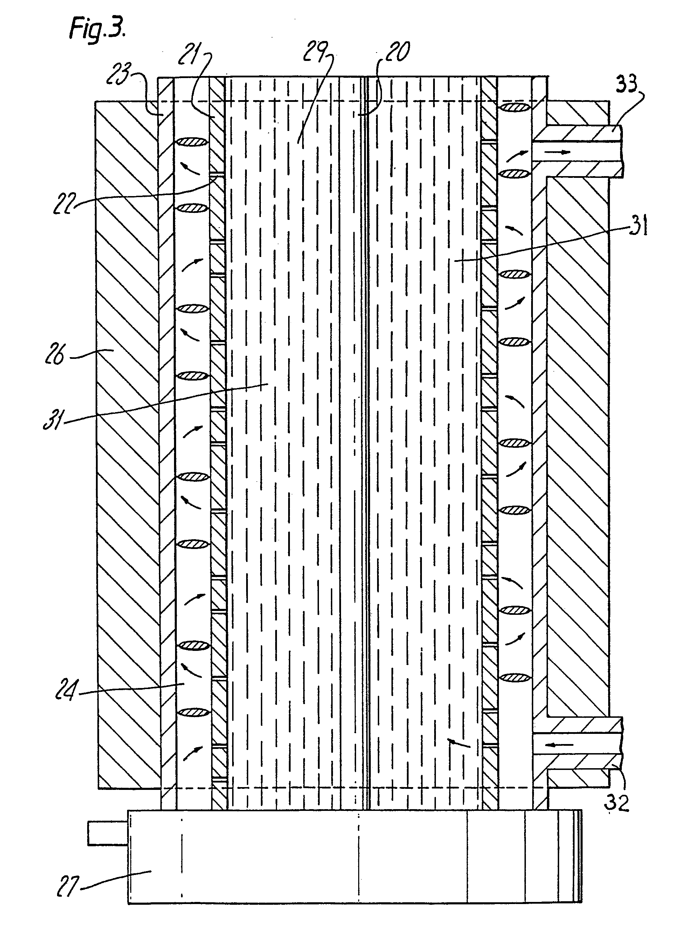

The arrangement of Figure 3 differs from that of Figure 2 in the gas flow arrangement. Thus the reservoir duct 24 is divided into two helical ducts for the inflow and outflow respectively of the gaseous mixture, the ducts being respectively connected to an inlet pipe 32 and an exhaust pipe 33 attached to the outer tube 23. The distribution of the perforations 22 is adjusted to provide connections with the respective ducts. In other respects the operation of the arrangement of Figure 3 is similar to that of the Figure 2 arrangement.

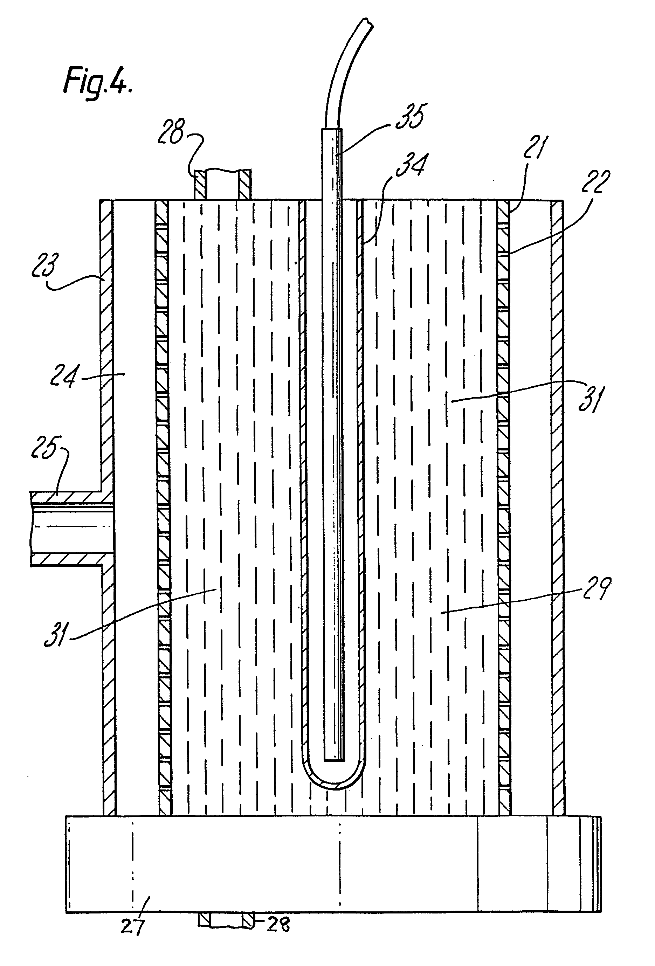

In the arrangement shown in Figure 4, the seed core is a vitreous silica tube 34, closed at the lower end and open at the upper end, and a heating element 35 is disposed within the tubular seed. The seed is surrounded by a perforated silica tube 21 and an outer tube 23 with an inlet 25 for gases, as in the arrangement of Figure 2, but no external heating furnace is provided. In operation, the seed tube 34 is maintained at about 1000°C by means of the heating element, while the outer tube 23 is maintained at or below room temperature, enabling the perforated tube 21 to be kept considerably cooler than the seed; the required gaseous reaction mixture is passed into the annular reaction zone 29, via the duct 24 and perforations 22, and a plasma column 31 is produced by the operation of the microwave cavity 27. The temperature gradient maintained between the seed and the perforated tube ensures that deposition of the required coating material occurs substantially wholly on the seed, with little or no deposition on the tube 21. If necessary, external cooling means (not shown) may be provided for maintaining the tubes 23 and 21 and duct 24 at the desired relatively low temperatures.

## Claims

1. A method of manufacturing a glass optical fibre preform in which a coating (19) composed essentially of one or more oxides is formed on a surface of an elongate cylindrical substrate (1, 20, 34) by causing a chemical reaction to take place between oxygen and the vapour or vapours of one or more compounds capable of reacting with oxygen to produce the desired coating material, wherein a tube (3, 21) which has a multiplicity of perforations (11, 22) through its wall is supported coaxially with the substrate, an annular space (5, 29) being provided between said tube and the substrate, and a gaseous mixture consisting of oxygen and said vapour or vapours, and optionally an additional carrier gas, is caused to flow into the said annular space, at least the said vapour or vapours being introduced into the annular space by being passed through the perforations in said tube, a sufficient gas pressure differential being maintained between the interior and exterior of said tube to cause gas to flow through the perforations into said annular space, while at least a major part of the length of the substrate is maintained at an elevated temperature, and a chemical reaction is caused to take place throughout the annular space by generating energy in said space, whereby a coating of solid material resulting from the said reaction is formed simultaneously on the whole of the said surface of the heated length of the substrate, while residual gases and gaseous reaction products are withdrawn from said annular space.

2. A method according to Claim 1, characterised in that the substrate consists of a glass tube (1), an inner tube (3) which has a multiplicity of perforations (11) through its wall supported coaxially within the substrate tube, and the said gaseous reaction mixture, or at least the said vapour or vapours, is or are introduced into the annular space (5) between the inner perforated tube and the substrate tube by being passed into the inner tube so as to emerge through said perforations into the said space, the gas pressure within the inner tube being maintained higher than that in the said space, while heat is applied to the exterior of at least a major part of the length of the substrate tube, and a chemical reaction is caused to take place throughout the said space by generating energy in said space, whereby a coating (19) of solid material resulting from the said reaction is formed simultaneously on the whole of the interior surface of the heated length of the substrate tube.

3. A method according to Claim 1, characterised in that the substrate consists of an elongate seed core (20, 34) and is supported coaxially within a tube (21) which has a multiplicity of perforations (22) through its wall, the perforated tube is surrounded by a coaxial outer tube (23), an annular duct (24) being provided between the inner perforated tube and the outer tube, and the said gaseous reaction mixture passed into said duct under sufficient pressure to cause flow of the gaseous mixture through the perforations of the inner tube into the annular space (29) between the inner tube and the seed core, while the seed core is maintained at an elevated temperature, and a chemical reaction is caused to take place throughout the said space by generating energy in said space, whereby a coating of solid material resulting from the said reaction is formed simultaneously on the whole of the exterior surface of the seed core.

4. A method according to Claim 3, characterised in that the seed core is a glass tube (34) and is maintained at an elevated temperature by heating means (35) disposed within said seed tube, while the said perforated tube (21), outer tube (23) and annular duct (24) are maintained at a temperature lower than that of the seed core.

5. A method according to any preceding Claim, characterised in that the perforations (11, 22) in the said perforated tube (3, 21) coaxial with the substrate (1, 20, 34) are varied in respect of number, diameter and/or distribution along the length of the tube, to control the rates of gas flow and deposition of the coating (19) so that the coating formed on the substrate is of uniform thickness both radially and longitudinally.

6. A method according to any preceding claim, characterised in that the energy for activating the coating-forming reaction is generated in said annular space (5, 29) by a plasma-exciting device (12, 15, 27), operated in such a manner as to produce a plasma column (18, 31) in the gaseous mixture in the said annular space, and to maintain the column throughout substantially the whole length of said space.

7. A method according to Claim 6, characterised in that the said plasma-exciting device is an asymmetrical microwave cavity (12, 27) which is located around one end of the substrate tube (1), or of the outer tube (23) around a seed core (20, 34), is maintained in a stationary position with respect to the assembly of substrate and perforated tube (3, 21) and is so designed and located that, in operation, the plasma column (18, 31) produced extends wholly along the said annular space (5, 29) between the substrate and the perforated tube.

8. A method according to Claim 7, characterised in that the substrate tube (1), or the outer tube (23) around the seed core (20, 34), is surrounded by an electrically conductive tube (16) abutting the microwave cavity (12, 27), the arrangement of the microwave cavity and the conductive tube being such that the combination of the conductive tube and the plasma column (18, 31) produced in operation constitutes a coaxial waveguide.

9. A method according to any of the preceding claims 1 to 5, characterised in that the energy for activating the coating-forming reaction is generated in said annular space (5, 29) by a laser located adjacent to one end of the substrate tube (1), or of the perforated tube (21) coaxial with the seed core (20, 34), and operated in such a manner that a laser beam is directed along and within the said annular space.

10. A method according to any preceding claim, characterised in that at least part of the energy required for activating the coating-forming reaction is generated by including a combustible gas in the gaseous reaction mixture, and effecting combustion of this gas in the annular space (5, 29) between the substrate (1, 20, 34) and the perforated tube (3, 21).

**Patentansprüche**

1. Verfahren zur Herstellung von Vorformen für optische Glasfasern, bei dem eine Beschichtung (19) aus im wesentlichen einem oder mehreren Oxiden auf einer Oberfläche eines langgestreckten zylindrischen Substrates (1, 20, 34) gebildet wird, indem man eine chemische Umsetzung zwischen Sauerstoff und dem Dampf oder den Dämpfen eines oder mehrerer Verbindungen ablaufen läßt, die mit Sauerstoff zu dem gewünschten Überzugsmaterial reagieren können, bei dem weiter ein Rohr (3, 21) mit einer Vielzahl von Durchbohrungen (11, 22) in seiner Wandung koaxial mit dem Substrat gehaltert wird, so daß ein ringförmiger Raum (5, 29) zwischen dem Rohr und dem Substrat gebildet wird, und ein gasförmiges Gemisch aus Sauerstoff und dem Dampf oder den Dämpfen und gewünschtenfalls einem zusätzlichen Trägergas in den ringförmigen Raum strömengelassen wird, wobei mindestens der Dampf oder die Dämpfe dadurch in den ringförmigen Raum eingeführt werden, daß man sie durch die Durchbohrungen in dem Rohr hindurchtreten läßt, wobei ferner ein hinreichendes Gasdruckgefälle zwischen dem Inneren und dem Äußeren des Rohres aufrechterhalten wird, um das Gas durch die Durchbohrungen in den ringförmigen Raum strömen zu lassen, während mindestens der Hauptteil der Länge des Substrates auf einer erhöhten Temperatur gehalten wird und eine chemische Umsetzung in dem gesamten ringförmigen Raum ablaufengelassen wird, indem man in dem Raum Energie erzeugt, wodurch aufgrund der Umsetzung eine Beschichtung auf festem Material gleichzeitig auf der Gesamtheit der Oberfläche der erhitzten Länge des Substrates gebildet wird, während restliche Gase und gasförmige Umsetzungsprodukte aus dem ringförmigen Raum abgezogen werden.

2. Verfahren gemäß Anspruch 1, dadurch gekennzeichnet, daß das Substrat aus einem Glasrohr (1) besteht, wobei ein inneres Rohr (3) mit einer Vielzahl von Durchbohrungen (11) in seiner Wandung koaxial mit dem Substratrohr angeordnet ist, und das gasförmige Reaktionsgemisch oder mindestens der Dampf oder die Dämpfe in den ringförmigen Zwischenraum (5) zwischen dem inneren, die Durchbohrungen aufweisenden Rohr und dem Substratrohr eingeführt wird bzw. werden, indem es bzw. er bzw. sie in das innere Rohr geleitet wird bzw. werden, so daß es bzw. er bzw. sie durch die Durchbohrungen in den Zwischenraum gelangt bzw. gelangen, der Gasdruck innerhalb des inneren Rohres höher gehalten wird als in dem Zwischenraum, während Wärme an die Außenseite von mindestens einem Hauptabschnitt der Länge des Substratrohres herangeführt wird und eine chemische Umsetzung in den gesamten Zwischenraum ablaufengelassen wird, indem man in dem Raum Energie erzeugt, wodurch eine Beschichtung (19) aus festem Material aufgrund der Umsetzung gleichzeitig auf der Gesamtheit der Innenfläche der erhitzten Länge des Substratrohres gebildet wird.

3. Verfahren gemäß Anspruch 1, dadurch gekennzeichnet, daß das Substrat aus einem Langgestreckten Impfkern (20, 34) besteht und koaxial innerhalb eines Rohres (21) mit einer Vielzahl von Durchbohrungen (22) in seiner Wandung gehaltert ist, wobei das mit den Durchbohrungen versehene Rohr von einem äußeren Rohr (23) koaxial umgeben ist und ein ringförmiger Kanal (24) zwischen dem inneren Rohr mit den Durchbohrungen und dem äußeren Rohr vorgesehen ist, wobei ferner das gasförmige Reaktionsgemisch unter hinreichendem Druck in den Kanal geleitet wird, un es durch die Durchbohrungen des inneren Rohres in den ringförmigen Raum (29) zwischen dem inneren Rohr und dem Impfkern strömen zu lassen, während der Impfkern auf erhöhter Temperatur gehalten wird und eine chemische Umsetzung durch den gesamten Raum ablaufengelassen wird, indem man in dem Raum Energie erzeugt, wodurch eine Beschichtung auf festem Material aufgrund der Umsetzung gleichzeitig auf der gesamten äußern Oberfläche des Impfkerns gebildet wird.

4. Verfahren gemäß Anspruch 3, dadurch gekennzeichnet, daß der Impfkern ein Glasrohr (34) ist, das durch in seinem Inneren angeordnete Heizeinrichtungen (35) auf erhöhter Temperatur gehalten wird, während das mit den Durchbohrungen versehene Rohr (21), das äußere Rohr (23) und der ringförmige Kanal (24) bei niedrigerer Temperatur gehalten werden als der Impfkern.

5. Verfahren gemäß einem der vorhergehenden Ansprüche, dadurch gekennzeichnet, daß die Durchbohrungen (11, 22) in dem mit den Durchbohrungen versehenen, koaxial mit dem Substrat (1, 20, 34) angeordneten Rohr (3, 21) hinsichtlich Zahl, Durchmesser und bzw. oder Verteilung längs der Länge des Rohres variiert werden, um die Geschwindigkeiten der Gasströmung und die Abscheidung der Beschichtung (19) zu steuern, so daß die Beschichtung, die auf dem Substrat gebildet wird, sowohl in radialer als auch in Längsrichtung von gleichförmiger Dicke ist.

6. Verfahren gemäß einem der vorhergehenden Ansprüche, dadurch gekennzeichnet, daß die Energie zum Aktivieren der die Beschichtung bildenden Umsetzung in dem ringförmigen Raum (5, 29) durch eine plasmaanregende Einrichtung (12, 15, 27) erzeugt wird, die derart betrieben wird, daß sie eine Plasmasäule (18, 31) in dem gasförmigen gemisch in dem ringförmigen Raum hervorruft und die Säule durch praktisch die gesamte Länge des Raumes hindurch aufrecht erhält.

7. Verfahren gemäß Anspruch 6, dadurch gekennzeichnet, daß die plasmaerzeugende Einrichtung ein asymmetrischer Mikrowellenhohlraum (12, 27) ist, der um ein Ende des Substratrohres (1) oder um das den Impfkern (20, 34) umgebende äußere Rohr (23) herum angeordnet ist, hinsichtlich der Gesamtheit von Substrat und mit Durchbohrungen versehenem Rohr (3, 21) in feststehender Lage gehaltert ist und derart bemessen und angeordnet ist, daß im Betrieb sich die erzeugte Plasmasäule (18, 31) durch die gesamte Länge des ringförmigen Raumes (5, 29) zwischen Substrat und mit den Durchbohrungen versehenem Rohr erstreckt.

8. Verfahren gemäß Anspruch 7, dadurch gekennzeichnet, daß das Substratrohr (1) oder das den Impfkern (20, 34) umgebende äußere Rohr (23) von einem elektrisch leitenden Rohr (16), das an den Mikrowellenenhohlraum (12, 27) anstößt, umgeben wird, wobei die Anordnung von Mikrowellenhohlraum une leitendem Rohr derart ist, daß die Kombination auf leitendem Rohr und erzeugter Plasmasäule (18, 31) im Betrieb einen koaxialen Hohlleiter bildet.

9. Verfahren gemäß einem der Ansprüche 1 bis 5, dadurch gekennzeichnet, daß die Energie zum Aktivieren der die Beschichtung bildenden Umsetzung in dem ringförmigen Raum (5, 29) durch einen Laser erzeugt wird, der angrenzend an ein Ende des Substratrohres (1) oder des mit den Durchbohrungen versehenen, mit dem Impfkern (20, 34) koaxialen Rohres (21) angeordnet ist und derart betrieben wird, daß ein Laserstrahl in Längsrichtung innerhalb des ringförmigen Raumes gerichtet wird.

10. Verfahren gemäß einem der vorhergehenden Ansprüche, dadurch gekennzeichnet, daß mindestens ein Teil der Energie, die zur Aktivierung der die Beschichtung bildenden Umsetzung erforderlich ist, dadurch erzeugt wird, daß man dem gasförmigen Umsetzungsgemisch ein brennbares Gas einverleibt und die Verbrennung dieses Gases in dem ringförmigen Raum (5, 29) zwischen dem Substrat (1, 20, 34) und dem mit den Durchbohrungen versehenen Rohr (3, 21) bewirkt.

## Revendications

1. Procédé de fabrication d'une préforme ou ébauche pour fibres optiques en verre, dans lequel on forme un revêtement (19) composé essentiellement d'un ou plusieurs oxydes sur une surface d'un substrat cylindrique allongé (1, 20, 34) en provoquant une réaction chimique entre l'oxygène et la ou les vapeurs d'un ou plusieurs composés capables de réagir avec l'oxygène pour produire la matière voulue de revêtement, procédé dans lequel un tube (3, 21), dont la paroi est percée de multiples perforations (11, 22), est supporté coaxialement avec le substrat, un espace annulaire (5, 29) étant réalisé entre ledit tube et le substrat, et on provoque la pénétration d'un mélange gazeux, consistant en de l'oxygène et ladite ou lesdites vapeurs, et éventuellement un véhicule gazeux supplémentaire, dans ledit espace annulaire, au moins ladite ou lesdites vapeurs étant introduites dans l'espace annulaire en passant par les perforations ménagées dans ledit tube, une différence de pression entre les gaz étant maintenue entre l'intérieur et l'extérieur dudit tube à une valeur suffisante pour provoquer l'écoulement du gaz par les perforations et la pénétration dans ledit espace annulaire, cependant qu'au moins une majeure partie de la longueur de substrat est maintenue à une température élevée, et l'on provoque la réalisation d'une réaction chimique dans tout l'espace annulaire en engendrant de l'énergie dans ledit espace, de sorte qu'il se forme, simultanément sur la totalité de ladite surface de la longueur chauffé du substrat, un revêtement de matière solide résultant de ladite réaction, cependant que l'on retire dudit espace annulaire les gaz résiduels et les produits gazeux de réaction.

2. Procédé selon la revendication 1, caractérisé en ce que le substrat consiste en un tube (1) en verre, en ce qu'un tube interne (3), dont la paroi est percée de multiples perforations (11), est supporté coaxialement au sein du tube formant substrat en ce qu'on introduit dans l'espace (5) annulaire (5), entre le tube interne perforé et le tube formant substrat, ledit mélange gazeux de réaction ou au moins ladite vapeur ou lesdites vapeurs en le ou les faisant pénétrer dans le tube interne de façon à émerger par lesdites perforations dans ledit espace, la pression de gaz régnant au sein du tube interne étant maintenue supérieure à celle régnant dans ledit espace, cependant que l'on applique un chauffage à l'extérieur d'au moins une majeure partie de la longueur du tube formant substrat et on provoque la réalisation d'une réaction chimique dans tout ledit espace en engendrant de l'énergie dans ledit espace, de sorte qu'il se forme un revêtement (19) de matière solide, résultant de ladite réaction, simultanément sur la totalité de la surface intérieure de la longueur chauffée du tube formant substrat.

3. Procédé selon la revendication 1, caractérisé en ce que le substrat consiste en une âme allongée d'amorçage (20, 34) et est supporté coaxialement au sein d'un tube (21) dont la paroi est percée de multiples perforations (22), le tube perforé est entouré d'un tube externe (23) coaxial, ce qui ménage un conduit annulaire (24) entre le tube interne perforé et le tube externe, et l'on introduit ledit mélange gazeux de réaction dans ledit conduit sous une pression suffisant pour provoquer l'écoulement du mélange gazeux par les perforations du tube interne pour pénétrer dans l'espace annulaire (29) entre le tube interne et l'âme d'amorçage, cependant que l'on maintient l'âme d'amorçage, cependent que l'on maintient l'âme d'amorçage à une température élevée, et que l'on provoque une réaction chimique dans tout ledit espace en engendrant de l'énergie dans ledit espace, de sorte qu'il se forme un revêtement de matière solide, résultant de ladite réaction, simultanément sur la totalité de la surface extérieure de l'âme d'amorçage.

4. Procédé selon la revendication 3, caractérisé en ce que l'âme d'amorçage est un tube (34) en verre et est maintenue à une température élevée par un moyen de chauffage (35) disposé au sein dudit tube d'amorçage, cependant que l'on maintient à une température inférieure à celle de l'âme d'amorçage ledit tube perforé (21), le tube externe (23) et le conduit annulaire (24).

5. Procédé selon l'une quelconque des revendications précédentes, caractérisé en ce qu'on fait varier en nombre, diamètre et/ou distribution le long du tube les perforations (11, 22) dudit tube perforé (3, 21) coaxial avec le substrat (1, 20, 34) afin de régler les débits de gaz et le dépôt du revêtement (19) de manière que le revêtement formé sur le substrat ait une épaisseur uniforme aussi bien radialement que longitudinalement.

6. Procédé selon l'une quelconque des revendications précédentes, caractérisé en ce qu'on engendre l'énergie destinée à activer la réaction de formation du revêtement dans ledit espace annulaire (5, 29) par un dispositif (12, 15, 27) d'excitation par plasma, que l'on fait fonctionner de manière à produire une colonne de plasma (18, 31) dans le mélange gazeux se trouvant dans ledit espace annulaire, et de manière à maintenir la colonne essentiellement sur la totalité de la longueur dudit espace.

7. Procédé selon la revendication 6, caractérisé en ce que ledit dispositif d'excitation par plasma est une cavité asymétrique (12, 27) à micro-ondes, qui est placée autour d'une extrémité du tube (1) formant substrat ou du tube externe (23) entourant une âme d'amorçage (20, 34), est maintenue en position stationnaire par rapport à l'ensemble formé par le substrat et par le tube perforé (3, 21) et est conçue et placée de manière qu'en service la colonne de plasma (18, 31) produite s'étende en totalité le long dudit espace annulaire (5, 29) entre le substrat et le tube perforé.

8. Procédé selon la revendication 7, caractérisé en ce que le tube (1) formant substrat, ou le tube externe (23) entourant l'âme d'amorçage (20, 34), est entouré d'un tube (16) électriquement conducteur s'appuyant contre le cavité (12, 27) à micro-ondes, l'agencement de la cavité à microondes et du tube conducteur étant tel que la combinaison du tube conducteur et de la colonne de plasma (18, 31) produite en fonctionnement constitue un guide d'ondes coaxial.

9. Procédé selon l'une quelconque des revendications 1 à 5 précédentes, caractérisé en ce que l'énergie destinée à activer la réaction de formation du revêtement est engendrée dans ledit espace annulaire (5, 29) par un laser placé au voisinage d'une extrémité du tube (1) formant substrat ou du tube perforé (21) coaxial avec l'âme d'amorçage (20, 34) et que l'on fait fonctionner de manière à diriger un faisceau laser le long dudit espace annulaire et au sein de cet espace annulaire.

10. Procédé selon l'une quelconque des revendications précédentes, caractérisé en ce qu'on engendre au moins une partie de l'énergie nécessaire pour activer la réact formation du revêtement en incorporant un gaz combustible au mélange gazeux de réaction et en effectuant la combustion de ce gaz dans l'espace annulaire (5, 29) situé entre le substrat (1, 20, 34) et le tube perforé (3, 21).

Fig.1.

# Fig. 2.

Fig.3.

# Fig.4.